(19) Europäisches Patentamt / European Patent Office / Office européen des brevets

(11) **EP 3 733 483 A1**

(12) **EUROPEAN PATENT APPLICATION**

(43) Date of publication:
**04.11.2020 Bulletin 2020/45**

(51) Int Cl.:
**B62D 15/02** *(2006.01)*    **B62D 5/04** *(2006.01)*

(21) Application number: **20169449.4**

(22) Date of filing: **14.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.04.2019 JP 2019077223**

(71) Applicant: **JTEKT CORPORATION**
**Chuo-ku,**
**Osaka-shi,**
**Osaka 542-8502 (JP)**

(72) Inventors:
• KONDO, Yoshio
  Osaka-shi,, Osaka 542-8502 (JP)
• KISHIDA, Fumio
  Osaka-shi,, Osaka 542-8502 (JP)
• OGATA, Toshiaki
  Osaka-shi,, Osaka 542-8502 (JP)
• NAKAMURA, Keishi
  Osaka-shi,, Osaka 542-8502 (JP)
• SUZUKI, Hirohide
  Osaka-shi,, Osaka 542-8502 (JP)

(74) Representative: **Winter, Brandl, Fürniss, Hübner, Röss, Kaiser, Polte - Partnerschaft mbB**
**Patent- und Rechtsanwaltskanzlei**
**Alois-Steinecker-Straße 22**
**85354 Freising (DE)**

(54) **STEERING DEVICE**

(57)    A steering device includes: a steered shaft (11); a first nut (17); a second nut (18); a first motor (15); a second motor (16); a first power transmission portion (15A) that transmits a first drive force generated by the first motor to the first nut (17), converts the first drive force into a force in an axial direction, and biases the steered shaft in the axial direction; a second power transmission portion (16A) that transmits a second drive force gener- ated by the second motor to the second nut (18), converts the second drive force into a force in the axial direction, and biases the steered shaft in the axial direction; a signal detection device (45) that detects a first detection signal and a second detection signal with different periods; and a computation device (60) that computes an absolute position of the steered shaft in the axial direction.

FIG. 2

EP 3 733 483 A1

**Description**

BACKGROUND OF THE INVENTION

1. Field of the Invention

The present invention relates to a steering device.

2. Description of Related Art

In recent years, there have been known steer-by-wire steering devices in which a steering wheel operated by a driver and a steered shaft are not mechanically coupled to each other with the steering wheel and the steered shaft not physically coupled to each other, such as that described in Japanese Unexamined Patent Application Publication No. 2010-214978 (JP 2010-214978 A), for example. The steering device according to JP 2010-214978 A is provided with two split steered shafts. Each of the steered shafts include a motor that enables movement of the corresponding steered shaft in the axial direction. Rotation of the two motors is controlled based on the rotational angle of the steering wheel that is operated by the driver, and the two steered shafts are moved in the axial direction to steer steered wheels by an amount desired by the driver, for example. In such a steering device, normally, it is necessary to grasp the absolute position of the steered shafts in the axial direction at all times. Therefore, in the steering device according to JP 2010-214978 A, the absolute position of the steered shafts in the axial direction is detected by a steered angle sensor provided to the steered shafts.

SUMMARY OF THE INVENTION

In the case where the steered angle sensor is fixed around the steered shafts, however, the structure of the steering device is complicated, and the size of the steering device is increased since a predetermined space is required around the steered shafts. With the steering device according to JP 2010-214978 A, in addition, it is necessary to grasp the absolute position of each of the two split steered shafts, and therefore the effect described above is significantly distinguished.

The present invention provides a small steer-by-wire steering device that can detect the absolute position of the steered shaft in the axial direction with a simple configuration.

An aspect of the present invention provides a steering device. The steering device includes: a steered shaft that has a first male thread groove provided as one of a right-hand thread and a left-hand thread and a second male thread groove provided as the other of a right-hand thread and a left-hand thread, the steered shaft being moved in an axial direction to steer right and left steered wheels; a first nut threadedly engaged with the first male thread groove; a second nut threadedly engaged with the second male thread groove; a first motor configured to generate a first drive force through rotation of a first rotary shaft; a second motor configured to operate independently of the first motor and configured to generate a second drive force through rotation of a second rotary shaft; a first power transmission portion configured to transmit the first drive force generated by the first motor to the first nut, configured to convert the first drive force into a force in the axial direction, and configured to bias the steered shaft in the axial direction; a second power transmission portion configured to transmit the second drive force generated by the second motor to the second nut, configured to convert the second drive force into a force in the axial direction, and configured to bias the steered shaft in the axial direction; a signal detection device configured to detect a first detection signal and a second detection signal with different periods as detection signals, the detection signals vary periodically in correspondence with an absolute position of the steered shaft after being moved by a predetermined amount of movement by being biased in the axial direction by the first drive force and the second drive force that are transmitted to the first nut and the second nut; and a computation device configured to compute the absolute position of the steered shaft in the axial direction based on the first detection signal and the second detection signal that are detected by the signal detection device.

In this manner, the signal detection device is configured to detect two detection signals (the first detection signal and the second detection signal) with different periods as detection signals that vary periodically in correspondence with an amount of movement by which the single steered shaft is moved in the axial direction. The computation device computes the absolute position of the steered shaft in the axial direction based on the first detection signal and the second detection signal with different periods. At this time, the computation device can compute the absolute position of the steered shaft in the axial direction based on the acquired first detection signal and the acquired second detection signal by just grasping the correlation between the amount of movement (absolute position) of the steered shaft and the first detection signal and the second detection signal corresponding to the amount of movement in advance. With such a simple configuration, it is not necessary to secure a space around the steered shaft in order to attach a steered angle sensor as in the related art, and an increase in the size of the steering device can be suppressed well.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 illustrates the overall configuration of a steering device;
FIG. 2 is a sectional view illustrating the detailed configuration of the steering device;
FIG. 3 illustrates the structure of a first rotational angle sensor and a second rotational angle sensor;
FIG. 4 is a circuit diagram of the first rotational angle sensor and the second rotational angle sensor;
FIG. 5A illustrates an example of the output state of a first detection signal Rm;
FIG. 5B illustrates an example of the output state of a second detection signal Rt;
FIG. 5C illustrates the deviation ($\theta 4 - \theta 3$) between the first detection signal Rm and the second detection signal Rt;
FIG. 6 illustrates the configuration of a fifth modification and corresponds to FIG. 2; and
FIG. 7 illustrates the configuration of a sixth modification and corresponds to FIG. 2.

DETAILED DESCRIPTION OF EMBODIMENTS

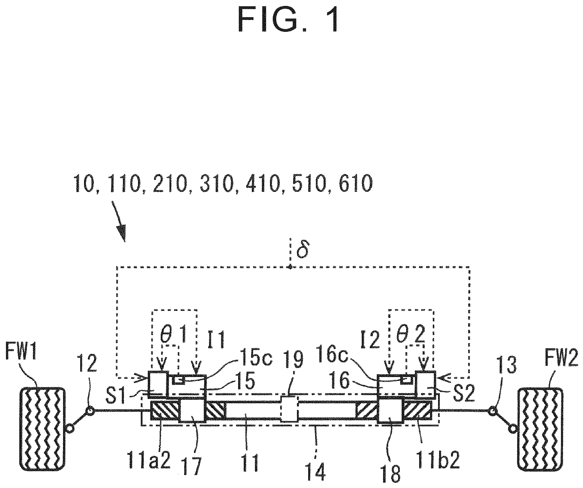

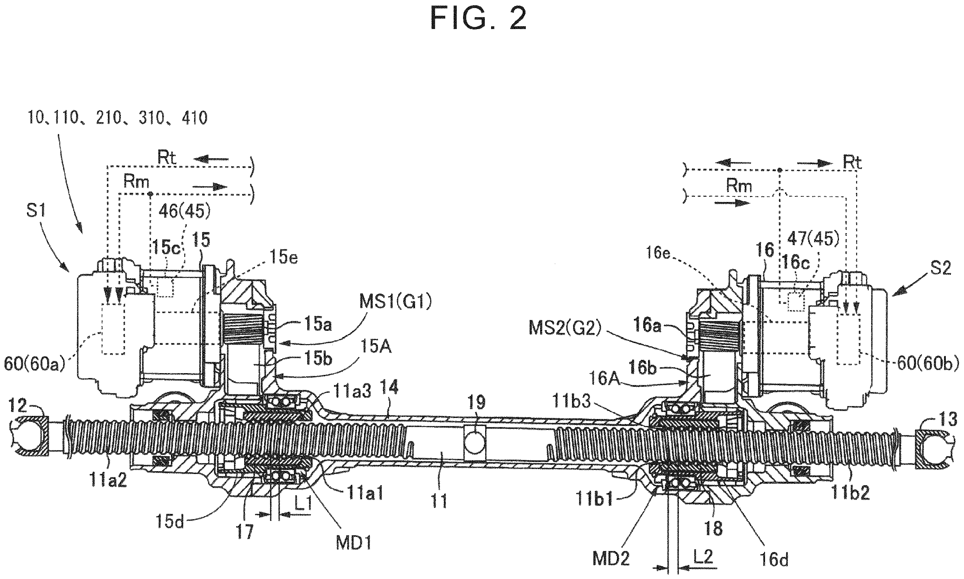

As illustrated in FIG. 1, a steering device 10 according to an embodiment includes a steered shaft 11 coupled to right and left front wheels FW2, FW1 that serve as the right and left steered wheels to steer the right and left front wheels FW2, FW1. As illustrated in FIGS. 1 and 2, respective ends of the steered shaft 11 are coupled to ball joints 12, 13. The steered shaft 11 is coupled to the right and left front wheels FW2, FW1 via link mechanisms (e.g. tie rods) coupled to the respective ball joints 12, 13.

The steered shaft 11 is housed inside a hollow housing 14 so as to be displaceable in the axial direction. The steered shaft 11 has a first male thread groove 11a2 formed as one of a right-hand thread and a left-hand thread in the axial direction, and a second male thread groove 11b2 formed as the other of a right-hand thread and a left-hand thread. The steered shaft 11 is moved relative to the housing 14 in the axial direction to steer the right and left front wheels FW2, FW1 (steered wheels).

The steering device 10 includes a first ball screw nut 17 (corresponding to the first nut) threadedly engaged with the first male thread groove 11a2 and a second ball screw nut 18 (corresponding to the second nut) threadedly engaged with the second male thread groove 11b2. The first ball screw nut 17 has balls 11a1 that are rolling elements and a rolling path 11a3 in which the balls 11a1 roll. The second ball screw nut 18 has balls 11b1 that are rolling elements and a rolling path 11b3 in which the balls 11b1 roll.

That is, the rolling path 11a3 and the rolling path 11b3 are on the right-hand/left-hand thread relationship (opposite to each other in the thread direction). A plurality of the balls 11a1 and 11b1 roll while circulating in the rolling paths 11a3 and 11b3, respectively.

As illustrated in FIGS. 1 and 2, the steering device 10 includes a first electric motor 15 (corresponding to the first motor) and a second electric motor 16 (corresponding to the second motor). Operations of the first electric motor 15 and the second electric motor 16 are independently controlled from each other by steering control devices S1 and S2, respectively. The steering control devices S1 and S2 are each a microcomputer that includes a CPU, a ROM, a RAM, etc. as main constituent parts, and receive, as an input, an electric signal $\delta$ that indicates a target steering amount for steering the right and left front wheels FW2, FW1 as illustrated in FIG. 1.

Consequently, the first electric motor 15 generates a first drive force through rotation of a first rotary shaft 15e (see FIG. 2). The second electric motor 16 generates a second drive force through rotation of a second rotary shaft 16e (see FIG. 2) independently of the first electric motor 15. As illustrated in FIG. 2, the first electric motor 15 and the second electric motor 16 are fixed to the housing 14 such that output shafts (more particularly, a pulley 15a and a pulley 16a to be described later) face each other. The first rotary shaft 15e and the second rotary shaft 16e are coupled to the pulley 15a and the pulley 16a so as to be rotatable together.

The steering control device S1 receives, as an input, a rotational angle $\theta 1$ of the first electric motor 15 detected by a rotational angle sensor 15c such as a resolver provided to the first electric motor 15. In addition, the steering control device S2 receives, as an input, a rotational angle $\theta 2$ of the second electric motor 16 detected by a rotational angle sensor 16c such as a resolver provided to the second electric motor 16. The rotational angle $\theta 1$ and the rotational angle $\theta 2$ are each a rotational angle corresponding to the absolute position, that is, the steering amount, of the steered shaft 11 in the axial direction.

The steering control devices S1 and S2 perform feedback control on the rotational angle $\theta 1$ and the rotational angle $\theta 2$, that is, the position of the steered shaft 11. The steering control devices S1 and S2 supply a drive current I1 to the first electric motor 15 and supply a drive current I2 to the second electric motor 16 by performing PID control, for example, on a drive circuit (not illustrated) such that the steering amount (position) of the steered shaft 11 reaches a target steering amount (target steered shaft position) indicated by the electric signal $\delta$. Consequently, the right and left front wheels FW2, FW1 can be steered to a steering amount that coincides with the target steering amount that is indicated by the electric signal δ. The steering control devices S1 and S2 can perform feedback control on the drive current I1 and the drive current I2 instead of or in addition to performing feedback control on the rotational angle θ1 and the rotational angle θ2.

The first ball screw nut 17 is disposed on the radially outer side of the first male thread groove 11a2, which is provided on the steered shaft 11, coaxially with the first male thread groove 11a2. The second ball screw nut 18 is disposed on the radially outer side of the second male thread groove 11b2, which is provided on the steered shaft 11, coaxially with the second male thread groove 11b2.

As illustrated in FIG. 2, the first drive force is transmitted from the first electric motor 15 to the first ball screw nut 17 via the pulley 15a with a small diameter, a belt 15b, and a pulley 15d with a large diameter, which constitute a first power transmission portion 15A. The first ball screw nut 17 is stored and fixed in the pulley 15d that is in a bottomed cylindrical shape. At this time, the belt 15b is engaged with the outer periphery of the pulley 15d that is rotatable together with the first ball screw nut 17.

At this time, the pulley 15a with a small diameter and the pulley 15d with a large diameter have different pitch diameters, and a first speed reduction ratio G1 is determined in accordance with the difference in the pitch diameter. That is, the pulley 15a, the belt 15b, the pulley 15d, and the first ball screw nut 17 form a first speed reduction mechanism MS1 that reduces the rotational speed of the pulley 15a (first rotary shaft 15e) at the first speed reduction ratio G1. Consequently, the first drive force is transmitted to the first ball screw nut 17 with the rotational speed of the pulley 15a (first rotary shaft 15e) reduced at the first speed reduction ratio G1.

When the first drive force at a reduced rotational speed is transmitted from the first electric motor 15 to the first ball screw nut 17 via the pulley 15a, the belt 15b, and the pulley 15d, the first ball screw nut 17 is rotated relative to the first male thread groove 11a2 of the steered shaft 11 at a rotational speed reduced in accordance with the first speed reduction ratio G1.

Consequently, the balls 11a1 (corresponding to the rolling elements) that are disposed between the first male thread groove 11a2 and the first ball screw nut 17 roll along the rolling path 11a3, and the first drive force that is generated by the first electric motor 15 is converted into a biasing force that moves the steered shaft 11 in the axial direction (linear direction), that is, a steering force for steering the right and left front wheels FW2, FW1.

That is, a first feed screw portion MD1 includes the first ball screw nut 17, the first male thread groove 11a2, and the balls 11a1. The first feed screw portion MD1 changes the direction of the first drive force from the rotational direction into the axial direction, and moves the steered shaft 11 in the axial direction by a predetermined amount of movement.

The predetermined amount of movement of the steered shaft 11 is determined in accordance with the amount of rotation (phase of rotation) of the first ball screw nut 17 and a lead L1 (corresponding to a first lead) of the rolling path 11a3. In this manner, the first power transmission portion 15A biases the steered shaft 11 in the axial direction by converting the first drive force into a force in the axial direction (linear direction) using the first feed screw portion MD1.

As illustrated in FIG. 2, the second drive force is transmitted from the second electric motor 16 to the second ball screw nut 18 via the pulley 16a with a small diameter, a belt 16b, and a pulley 16d with a large diameter, which constitute a second power transmission portion 16A. The second ball screw nut 18 is stored and fixed in the pulley 16d that is in a bottomed cylindrical shape. At this time, the inner peripheral surface of the belt 16b is engaged with the outer peripheral surface of the second ball screw nut 18, and the belt 16b is also engaged with the outer periphery of pulley 16d that is rotatable together with the second ball screw nut 18.

At this time, the pulley 16a and the pulley 16d have different pitch diameters, and a second speed reduction ratio G2 is determined in accordance with the difference in the pitch diameter. That is, the pulley 16a, the belt 16b, the pulley 16d, and the second ball screw nut 18 form a second speed reduction mechanism MS2 that reduces the rotational speed of the pulley 16a (second rotary shaft 16e) at the second speed reduction ratio G2. Consequently, the second drive force is transmitted to the second ball screw nut 18 (pulley 16d) with the rotational speed of the pulley 16a (second rotary shaft 16e) reduced at the second speed reduction ratio G2. In the present embodiment, the second speed reduction ratio G2 and the first speed reduction ratio G1 are equal to each other.

When the second drive force at a reduced rotational speed is transmitted from the second electric motor 16 to the second ball screw nut 18 via the pulley 16a, the belt 16b, and the pulley 16d, the second ball screw nut 18 is rotated relative to the second male thread groove 11b2 of the steered shaft 11 at a rotational speed reduced in accordance with the second speed reduction ratio G2.

Consequently, the balls 11b1 (corresponding to the rolling elements) that are disposed between the second male thread groove 11b2 and the second ball screw nut 18 roll along the rolling path 11b3, and the second drive force of the second electric motor 16 is converted into a biasing force that moves the steered shaft 11 in the axial direction (linear direction), that is, a steering force for steering the right and left front wheels FW2, FW1.

That is, a second feed screw portion MD2 includes the second ball screw nut 18, the second male thread groove 11b2, and the balls 11b1. The second feed screw portion MD2 changes the direction of the second drive force into the axial direction, and moves the steered shaft 11 in the axial direction by a predetermined amount of movement.

The predetermined amount of movement of the steered shaft 11 is determined in accordance with the amount of rotation (phase of rotation) of the second ball screw nut 18 and a lead L2 (corresponding to a second lead) of the rolling path 11b3. In the present embodiment, the lead L2 is the same as the lead L1 of the rolling path 11a3 in the first power transmission portion 15A (L1 = L2). At this time, in the present embodiment, there is only one steered shaft 11, and therefore the second power transmission portion 16A moves the steered shaft 11 and the first power transmission portion 15A moves the steered shaft 11 by the same amount and in the same direction.

Although not described in detail, the steered shaft 11 normally receives rotational torque about an axis by the action of the first feed screw portion MD1 and the second feed screw portion MD2. However, the rotational torque is controlled such that rotational torques in opposite directions and with equal magnitude is applied. Therefore, no rotational force about an axis is applied to the steered shaft 11 with the rotational torques in opposite directions canceling out each other.

However, the steering device 10 includes a rotation regulation portion 19 provided at the middle portion of the steered shaft 11, that is, between the first male thread groove 11a2 of the first feed screw portion MD1 and the second male thread groove 11b2 of the second feed screw portion MD2 that are provided at respective ends of the steered shaft 11. The rotation regulation portion 19 regulates rotation of the steered shaft 11 relative to the housing 14. Consequently, the rotation regulation portion 19 can mainly prevent rotation of the steered shaft 11 in the case where one of the first electric motor 15 and the second electric motor 16 fails and becomes inoperable, for example.

The steering device 10 also includes a signal detection device 45. Specifically, the signal detection device 45 includes a first rotational angle sensor 46 disposed in the first electric motor 15 and a second rotational angle sensor 47 disposed in the second electric motor 16. In the present embodiment, the first rotational angle sensor 46 and the second rotational angle sensor 47 are used also as the rotational angle sensors 15c and 16c that detect the rotational angle of the rotary shafts 15e and 16e of the first electric motor 15 and the second electric motor 16, respectively.

The signal detection device 45 (the first rotational angle sensor 46 and the second rotational angle sensor 47) is electrically connected to a computation device 60. At this time, the computation device 60 may be provided in each of the steering control devices S1 and S2, or may be provided separately from the steering control devices S1 and S2. In the present embodiment, computation devices 60a and 60b are provided in the steering control devices S1 and S2, respectively, as the computation device 60.

In the case where the steered shaft 11 is biased in the axial direction and moved by a predetermined amount of movement by the first drive force and the second drive force that are transmitted to the first ball screw nut 17 and the second ball screw nut 18, the first rotational angle sensor 46 and the second rotational angle sensor 47 detect a first detection signal Rm and a second detection signal Rt with different periods. The first detection signal Rm and the second detection signal Rt are output as detection signals that vary periodically in correspondence with the absolute position of the steered shaft 11 after being moved. The first rotational angle sensor 46 and the second rotational angle sensor 47 output the first detection signal Rm and the second detection signal Rt that are detected to the computation devices 60a and 60b, respectively.

The first rotational angle sensor 46 detects a first electrical angle θ3 of the first rotary shaft 15e of the first electric motor 15 corresponding to a predetermined absolute position of the steered shaft 11. Meanwhile, the second rotational angle sensor 47 detects a second electrical angle θ4 of the second rotary shaft 16e of the second electric motor 16 corresponding to a predetermined absolute position of the steered shaft 11.

The first detection signal Rm and the second detection signal Rt will be described. Before describing the first detection signal Rm and the second detection signal Rt, the first rotational angle sensor 46 and the second rotational angle sensor 47 will be first described. The first and second rotational angle sensors 46 and 47 are configured to detect the electrical angle of the first and second electric motors 15 and 16 with the multiplication factor of angle (corresponding to a first multiplication factor of angle a the second multiplication factor of angle) of the first and second rotational angle sensors 46 and 47 set to be equal to the number of pole pairs of the first and second electric motors 15 and 16. The steering control devices S1 and S2 control drive of the first and second electric motors 15 and 16, respectively, using the detected electrical angle. In the present embodiment, a known resolver is applied as both the first rotational angle sensor 46 and the second rotational angle sensor 47.

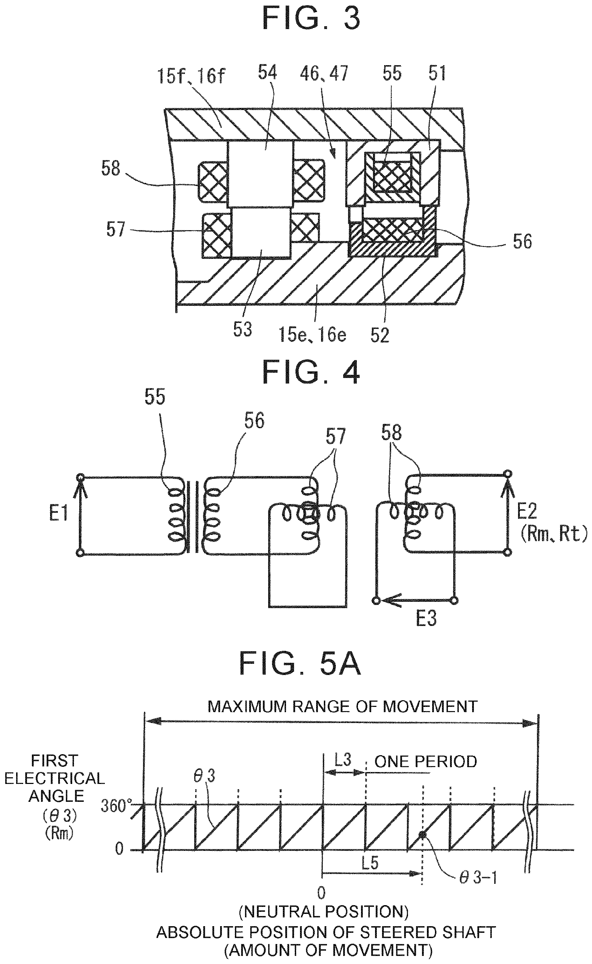

As illustrated in FIG. 3, the first rotational angle sensor 46 is constituted from first to fourth yokes 51 to 54 and first to fourth coils 55 to 58. The first yoke 51 is formed in an annular shape along the inner periphery of a motor housing 15f of the first electric motor 15, and fixed to the motor housing 15f. The first coil 55 is wound around the inner peripheral portion of the first yoke 51.

The second yoke 52 in an annular shape is fixed to the outer periphery of the first rotary shaft 15e so as to face the first yoke 51 and be rotatable together with the first rotary shaft 15e of the first electric motor 15. The second coil 56 is wound around the outer peripheral portion of the second yoke 52.

In addition, the third yoke 53 is fixed to the outer periphery of the first rotary shaft 15e so as to be rotatable together with the third yoke 53. The third coil 57 is wound around the periphery of the third yoke 53. The third coil 57 is constituted from two types of coils with a phase difference of 90 degrees between the coils, and connected to the second coil 56 (see FIG. 4). The fourth yoke 54 is fixed to the inner periphery of the motor housing 15f so as to face the third yoke 53. The fourth coil 58 is wound around the fourth yoke 54. The fourth coil 58 is also constituted from two types of coils with a phase difference of 90 degrees between the coils (see FIG. 4).

The second rotational angle sensor 47 is configured similarly to the first rotational angle sensor 46. In the description of the second rotational angle sensor 47, the same reference numerals as those of the yokes 51 to 54 and the coils 55 to 58 of the first rotational angle sensor 46 are used. Only different portions will be described with redundant descriptions omitted.

The second rotational angle sensor 47 is constituted from first to fourth yokes 51 to 54 and first to fourth coils 55 to 58. The first and fourth yokes 51 and 54 and the first and fourth coils 55 and 58 are provided to a motor housing 16f of the second electric motor 16. The second and third yokes 52 and 53 and the second and third coils 56 and 57 are provided to the second rotary shaft 16e. The configuration of the second rotational angle sensor 47 is otherwise the same as that of the first rotational angle sensor 46.

Operation of the first rotational angle sensor 46 for a case where the first rotary shaft 15e is rotated by the first electrical angle $\theta3$, for example, will be described for the convenience of later description. When an AC voltage E1 is applied to the first coil 55, as illustrated in FIG. 4, in the case where the first electric motor 15 is actuated and the first rotary shaft 15e is rotated by the first electrical angle $\theta3$, magnetic flux is generated in the first yoke 51 and the second yoke 52 in accordance with the applied voltage. Then, an AC voltage is induced in the second coil 56 in accordance with the generated magnetic flux. At this time, AC voltages are generated also in the third coil 57 since the second coil 56 is connected to the third coil 57.

At this time, since the third coil 57 is constituted from two types of coils with a phase difference of 90 degrees between the coils, the generated voltages also have a phase difference of 90 degrees. AC voltages are induced in the fourth coil 58 by the AC voltages that are generated in the third coil 57, and the fourth coil 58 outputs AC voltage signals E2 and E3. Amplitudes AE2 and AE3 of the AC voltage signals E2 and E3 meet the relationship of the following formulas (1) and (2).

$$AE2 = k \cdot E1 \times \cos\theta \cdots (1)$$

$$AE3 = k \cdot E1 \times \sin\theta \cdots (2)$$

k indicates the transformer ratio. At this time, $\theta$ can be calculated from the formulas (1) and (2), and the angle $\theta$ is the first electrical angle $\theta3$ of the first rotary shaft 15e. Likewise, the second electrical angle $\theta4$ of the second rotary shaft 16e is also calculated based on the formulas (1) and (2) from the second rotational angle sensor 47 that is provided to the second electric motor 16.

The electrical angles $\theta3$ and $\theta4$ are computed as described above in the case where the first rotational angle sensor 46 and the second rotational angle sensor 47 detect the rotational angle of the first rotary shaft 15e of the first electric motor 15 and the rotational angle of the second rotary shaft 16e of the second electric motor 16.

Next, the first detection signal Rm and the second detection signal Rt will be described. The first detection signal Rm and the second detection signal Rt correspond to the AC voltage signal (E2 or E3) that is output from the fourth coil 58 that constitutes the first rotational angle sensor 46 and the second rotational angle sensor 47 described above. Particularly, in the present embodiment, the first detection signal Rm corresponds to the AC voltage signals E2 and E3 that are output from the two coils that constitute the fourth coil 58 of the first rotational angle sensor 46. Meanwhile, the second detection signal Rt corresponds to the AC voltage signals E2 and E3 that are output from the two coils that constitute the fourth coil 58 of the second rotational angle sensor 47.

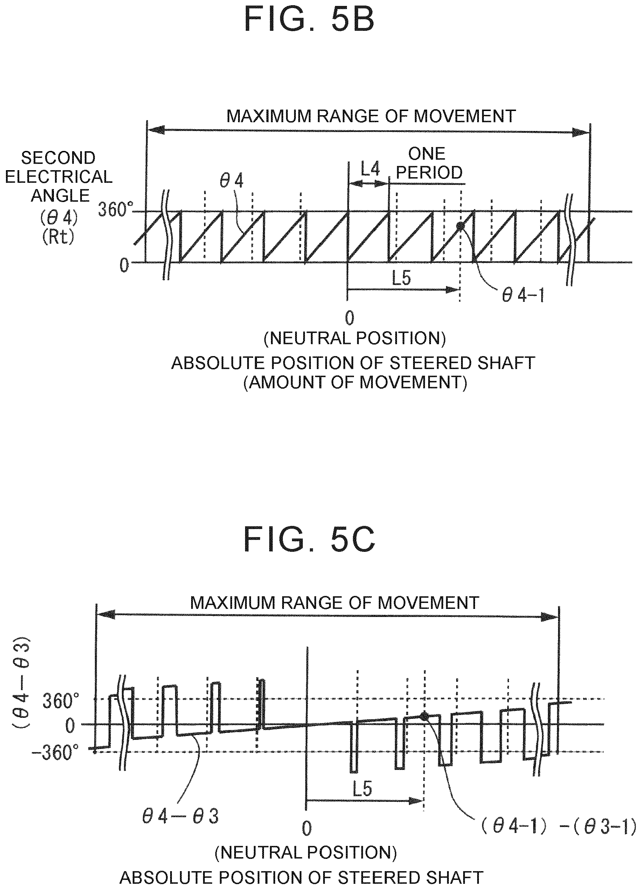

At this time, in order to detect different output values of the first detection signal Rm and the second detection signal Rt, a difference may be provided between the multiplication factor of angle of the first rotational angle sensor 46 and the multiplication factor of angle of the second rotational angle sensor 47, by way of example. In other words, as illustrated in FIGS. 5A and 5B, the respective numbers of repetitions of the first and second detection signals Rm and Rt per one rotation of the first and second rotary shafts 15e and 16e of the first and second electric motors 15 and 16 may be set to be different between the first rotational angle sensor 46 and the second rotational angle sensor 47. That is, the respective rotational angles of the first and second rotary shafts 15e and 16e per one period of the first and second detection signals Rm and Rt may be set to be different from each other. Consequently, the multiplication factor of angle (second multiplication factor of angle), which is the number of periods in which the second detection signal Rt varies during one rotation of the second rotary shaft 16e, is different from the multiplication factor of angle (first multiplication factor of angle), which is the number of periods in which the first detection signal Rm varies during one rotation of the first rotary shaft 15e.

The first power transmission portion 15A is set such that the steered shaft 11 is moved by a first amount of movement in the axial direction by transmitting the first drive force to the first ball screw nut 17 (first nut). The first amount of movement corresponds to one rotation of the first rotary shaft 15e. The first drive force is generated by the first electric motor 15 (first motor). In addition, the second power transmission portion 16A is set such that the steered shaft 11 is moved by a second amount of movement in the axial direction by transmitting the second drive force of the second electric motor 16 (second motor) to the second ball screw nut 18 (second nut). The second amount of movement corresponds to one rotation of the second rotary shaft 16e. In the present embodiment, the first amount of movement and the second amount of movement are set to be equal to each other.

In the present embodiment, as described above, the first speed reduction ratio G1 and the second speed reduction ratio G2 of the first and second speed reduction mechanisms MS1 and MS2 of the first and second power transmission portions 15A and 16A are equal to each other. In addition, the lead L1 and the lead L2 of the first and second feed screw portions MD1 and MD2 are also equal to each other. Thus, when the steered shaft 11 is moved by driving both the first electric motor 15 and the second electric motor 16 such that the first amount of movement and the second amount of movement of the steered shaft 11 are equal to each other, the rotational angle $\theta 1$ of the first rotary shaft 15e of the first electric motor 15 and the rotational angle $\theta 2$ of the second rotary shaft 16e of the second electric motor 16 are equal to each other.

In the present embodiment, however, as described above, the respective multiplication factors of angle of the first rotational angle sensor 46 and the second rotational angle sensor 47 are set be different from each other. Consequently, the first rotational angle sensor 46 and the second rotational angle sensor 47 detect the first detection signal Rm and the second detection signal Rt with different output values. Thus, the electrical angles $\theta 3$ and $\theta 4$ that are calculated from the first detection signal Rm and the second detection signal Rt are also different from each other.

In this manner, the computation devices 60a and 60b compute the absolute position of the steered shaft 11 using the output values of the two sensors (the first rotational angle sensor 46 and the second rotational angle sensor 47) that output different values for the same absolute position of the single steered shaft 11 as the measurement target and the first and second electrical angles $\theta 3$ and $\theta 4$ of the first electric motor 15 and the second electric motor 16 that are calculated from the output values. Therefore, the computation devices 60a and 60b store, as a conversion table or a conversion formula, the relationship between the absolute position of the steered shaft 11 as the measurement target and the first electrical angle $\theta 3$ for the first rotational angle sensor 46 and the relationship between the absolute position of the steered shaft 11 as the measurement target and the second electrical angle $\theta 4$ for the second rotational angle sensor 47. A method of setting an electrical angle is a known technique, and thus will not be described in detail.

In the present embodiment, in addition, the amount of movement of the steered shaft 11 in the axial direction corresponding to one period of the first electrical angle is defined as an amount of movement L3 (see FIG. 5A), and the amount of movement of the steered shaft 11 in the axial direction corresponding to one period of the second electrical angle is defined as an amount of movement L4 (see FIG. 5B (L3 ≠ L4)). Then, the amount of movement L3 and the amount of movement L4 are set to meet the relationship of L3 and L4 given below.

$$L3 \times m = L4 \times n \cdots (3)$$

When m is defined as a first desired integer and n is defined as a second desired integer in the formula (3), L3 and L4 are set such that there are no integer m and no integer n that meet the formula (3). Alternatively, in the case where there are an integer m and an integer n that meet the formula (3), L3 and L4 are set such that (L3×m) is larger than the amount of movement from the absolute position at the middle of the range of movement of the steered shaft 11 in the axial direction to the absolute position at a terminal end of the range of movement. In other words, in the case where there are an integer m and an integer n that meet the formula (3), L3 and L4 are set such that (L3×m) is larger than half the maximum range of movement of the steered shaft 11 in the axial direction (distance from the neutral position at the middle to an end portion of the maximum range of movement).

Particularly, it is necessary that (L3/L4) should be a rational number in order that there is a fraction (n/m) that meets (L3/L4) = (n/m). At this time, a rational number can be expressed as a fraction, and is one of an integer, a terminating decimal, and a repeating decimal. In the case where (L3/L4) is a fraction, the respective output values of the first detection signal Rm and the second detection signal Rt coincide with each other at a plurality of points in the absolute position of the steered shaft 11. In FIGS. 5A and 5B of the present embodiment, such output values coincide with each other at the neutral position in the absolute position of the steered shaft 11. The neutral position is the starting point of the repeated deviation between the first detection signal Rm and the second detection signal Rt. In addition, L3 and L4 are set such that the next point at which the respective output values of the first detection signal Rm and the second detection signal Rt coincide with each other is present outside the range of movement of the steered shaft 11 (not illustrated).

With such setting, the first electrical angle $\theta 3$ and the second electrical angle $\theta 4$ never coincide with each other except at the neutral position, and the combination between the value of the first electrical angle $\theta 3$ and the value of the second electrical angle $\theta 4$ and the absolute position of the steered shaft 11 make one-to-one correspondence, in the range of movement of the steered shaft 11.

In the case where (L3/L4) is not a fraction, that is, not a rational number, meanwhile, there is no point, except for the neutral point, at which the respective peaks of the first detection signal Rm and the second detection signal Rt coincide with each other, that is, no point in the absolute position of the steered shaft 11 at which the output value of the first electrical angle $\theta 3$ and the output value of the second electrical angle $\theta 4$ coincide with each other. That is, there is no starting point, except for the neutral position, at which the degree of the deviation between the first detection signal Rm and the second detection signal Rt starts repeating again. Therefore, electrical angles that are always different can be obtained with the first detection signal Rm and the second detection signal Rt.

Consequently, in the case where the first electrical angle $\theta 3$ and the second electrical angle $\theta 4$ are set to coincide with each other with the steered shaft 11 positioned at the neutral position, for example, as illustrated in FIGS. 5A and 5B, the respective output values of the first electrical angle $\theta 3$ and the second electrical angle $\theta 4$ do not coincide with each other in the maximum range of movement (corresponding to the distance of movement of the steered shaft from one stroke end to the other stroke end) in which the steered shaft 11 is movable except for the neutral position. Therefore, the first rotational angle sensor 46 and the second rotational angle sensor 47 can reliably acquire the electrical angles $\theta 3$ and $\theta 4$ with different values from the first and second detection signals Rm and Rt in the measurable range, which enables computation of the absolute position of the steered shaft 11.

The computation devices 60a and 60b are connected to the first rotational angle sensor 46 and the second rotational angle sensor 47, respectively. The computation devices 60a and 60b receive, as an input, the first detection signal Rm and the second detection signal Rt that are detected by the first rotational angle sensor 46 and the second rotational angle sensor 47, respectively, as described above. The computation devices 60a and 60b to which the first detection signal Rm and the second detection signal Rt are input compute the absolute position of the steered shaft 11 in the axial direction based on the signals Rm and Rt, respectively. The computation devices 60a and 60b that have the same configuration are provided in the steering control devices S1 and S2, respectively, as the computation device 60. However, the computation device 60 may be provided in one of the steering control devices S1 and S2.

Computation of the absolute position by the steering device 10 will be described. Before describing the computation, preconditions will be described. In the steering device 10, as the preconditions, the first speed reduction mechanism MS1 and the first feed screw portion MD1 in the first power transmission portion 15A and the second speed reduction mechanism MS2 and the second feed screw portion MD2 in the second power transmission portion 16A respectively have the same specifications as each other. In addition, the first electric motor 15 (first motor) and the second electric motor 16 (second motor) also have the same specifications as each other.

In the above state, the first electric motor 15 (first motor) and the second electric motor 16 (second motor) are controlled by the steering control devices S1 and S2, respectively. Consequently, the first electric motor 15 generates the first drive force through rotation of the first rotary shaft 15e. In addition, the second electric motor 16 generates the second drive force (that is equal in the magnitude to the first drive force) through rotation of the second rotary shaft 16e independently of the first electric motor 15.

The first and second drive forces are transmitted to the first and second power transmission portions 15A and 16A, respectively. The first and second power transmission portions 15A and 16A transmit the first and second drive forces to the first and second ball screw nuts 17 and 18 of the steered shaft 11 via the first and second speed reduction mechanisms MS1 and MS2 and the first and second feed screw portions MD1 and MD2, respectively. Consequently, the steered shaft 11 is moved by a first amount of movement L5 (= second amount of movement) corresponding to the first and second drive forces in a predetermined axial direction (see FIGS. 5A and 5B). At this time, the absolute position after the steered shaft 11 is moved by the first amount of movement L5 (second amount of movement L5) corresponds to the distance from the neutral position described above. In addition, the value of the first electrical angle $\theta 3$ at this time is defined as $\theta 3\text{-}1$ (see FIG. 5A). In addition, the value of the second electrical angle $\theta 4$ is defined as $\theta 4\text{-}1$.

In this manner, the first rotational angle sensor 46 detects the first electrical angle $\theta 3\text{-}1$ that is output in accordance with the rotational angle of the first rotary shaft 15e, and inputs the first electrical angle $\theta 3\text{-}1$ to the computation devices 60a and 60b. In addition, the second rotational angle sensor 47 detects the second electrical angle $\theta 4\text{-}1$ that is output in accordance with the rotational angle of the second rotary shaft 16e, and inputs the second electrical angle $\theta 4\text{-}1$ to the computation devices 60a and 60b. At this time, the first rotational angle sensor 46 and the second rotational angle sensor 47 have different multiplication factors of angle, and therefore the first electrical angle $\theta 3$ and the second electrical angle $\theta 4$ have different output values. Thus, the first electrical angle $\theta 3\text{-}1$ and the second electrical angle $\theta 4\text{-}1$ are also different from each other.

The computation devices 60a and 60b compute the absolute position of the steered shaft 11 based on the first electrical angle $\theta 3\text{-}1$ and the second electrical angle $\theta 4\text{-}1$ that are input. At this time, the computation devices 60a and 60b compute and specify the position of the steered shaft 11 for the acquired first electrical angle θ3 and the acquired second electrical angle θ4 based on the relationship (a conversion table or a conversion formula) between the absolute position of the steered shaft 11 and the first electrical angle θ3 and the relationship between the absolute position of the steered shaft 11 and the second electrical anble θ4, which are stored in a storage section (not illustrated).

That is, the absolute position of the steered shaft 11 is specified by comparing the first electrical angle θ3-1 and the second electrical angle θ4-1 that are acquired and the stored conversion table. Alternatively, the absolute position of the steered shaft 11 is specified by substituting the first electrical angle θ3-1 and the second electrical angle θ4-1 that are acquired into the stored conversion formula. Consequently, the absolute position of the steered shaft 11 can be specified reliably in a short time even if the steered shaft 11 is positioned at a position away from the neutral position when an ignition switch of the vehicle that has been turned off is turned on, for example.

The present invention is not limited to the above aspect. The computation devices 60a and 60b may compute the absolute position of the steered shaft 11 in accordance with the absolute position of the steered shaft 11 and the deviation (θ4-1 (θ4) - θ3-1 (θ3)) between the first electrical angle θ3-1 (θ3) and the second electrical angle θ4-1 (θ4) (see FIG. 5C). In this case, the computation devices 60a and 60b compute the difference between the second electrical angle θ4-1 and the first electrical angle θ3-1. For the reason described above, there is no absolute position of the steered shaft 11 at which the second electrical angle θ4-1 and the first electrical angle θ3-1 coincide with each other in the maximum range of movement of the steered shaft 11, except for the neutral position (see FIG. 5C). In other words, the absolute position of the steered shaft 11 and the deviation (θ4-1 (θ4) - θ3-1 (θ3)) make one-to-one correspondence in the maximum range of movement.

The computation devices 60a and 60b calculate the absolute position using a conversion table or a conversion formula based on the value of the deviation (θ4 - θ3). As illustrated in FIG. 5C, in the case where the first electrical angle θ3 and the second electrical angle θ4 transition from 360° to 0°, the value of the deviation (θ4 - θ3) is abruptly increased and abruptly decreased discontinuously. Therefore, the conversion table stores an array of conversion data divided into continuous sections of the deviation (θ4 - θ3), for example, and the absolute position is calculated with reference to such data.

In the case where a conversion formula is used, meanwhile, the conversion is performed separately for a case where the deviation (θ4 - θ3) is C1: 360° or more, a case where the deviation (θ4 - θ3) is C2: -360° or less, and a case where the deviation (θ4 - θ3) is C3: more than -360° and less than 360°. In the case of C3, the deviation (θ4 - θ3) and the absolute position are on the proportional relationship and pass through the origin of FIG. 5C, and therefore the absolute position is calculated using the following formula (4) that expresses the proportional relationship.

$$\text{(Absolute position)} = kk \times (θ4 - θ3) \cdots (4)$$

In the case of C1, the following formula (5) that is obtained by subtracting 360° from the formula (4) is used.

$$\text{(Absolute position)} = kk \times (θ4 - θ3) - 360° \cdots (5)$$

In the case of C2, the following formula (6) that is obtained by adding 360° to the formula (4) is used.

$$\text{(Absolute position)} = kk \times (θ4 - θ3) + 360° \cdots (6)$$

In the above formulas, kk is a predetermined constant.

In the present embodiment, a resolver is applied as the first rotational angle sensor 46 and the second rotational angle sensor 47. However, the present invention is not limited to this aspect. A Hall IC, a GMR sensor, etc. may be applied as the first rotational angle sensor 46 and the second rotational angle sensor 47. This configuration is also expected to achieve the same effect.

In the embodiment described above, the steering device 10 includes the steered shaft 11, the first ball screw nut 17 (first nut), the second ball screw nut 18 (second nut), the first electric motor 15 (first motor), the second electric motor 16 (second motor), the first power transmission portion 15A that converts the first drive force into a force in the axial direction to bias the steered shaft 11 in the axial direction, the second power transmission portion 16A that converts the second drive force into a force in the axial direction to bias the steered shaft 11 in the axial direction, the signal detection device 45 (the first rotational angle sensor 46 and the second rotational angle sensor 47) that detects the first detection signal Rm and the second detection signal Rt with different periods as detection signals that vary periodically in correspondence with the absolute position of the steered shaft 11 after being biased in the axial direction by the first drive force and the second drive force to be moved by a predetermined amount of movement, and the computation devices 60a and 60b (60) that compute the absolute position of the steered shaft 11 in the axial direction based on the first detection signal Rm and the second detection signal Rt that are detected by the signal detection device 45.

In this manner, the signal detection device 45 is configured to detect two detection signals (the first detection signal Rm and the second detection signal Rt) with different periods as detection signals corresponding to the predetermined amount of movement by which the single steered shaft 11 is moved in the axial direction. The computation devices 60a and 60b compute the absolute position of the steered shaft 11 in the axial direction based on the first detection signal Rm and the second detection signal Rt with different periods. At this time, the computation devices 60a and 60b can compute the absolute position of the steered shaft 11 in the axial direction by just grasping the correlation between the amount of movement (absolute position) of the steered shaft 11 and the first detection signal Rm and the second detection signal Rt corresponding to the amount of movement (absolute position) in advance.

That is, the absolute position of the steered shaft 11 can be grasped by the signal detection device 45 and the computation devices 60a and 60b. Since it is possible to grasp the absolute position with such a simple configuration, it is not necessary to secure an attachment space around the steered shaft 11 in order to attach a steered angle sensor as in the related art, and an increase in the size of the steering device 10 can be suppressed well.

In the embodiment described above, in addition, the signal detection device 45 includes the first rotational angle sensor 46 and the second rotational angle sensor 47. The first rotational angle sensor 46 is disposed in the first electric motor 15 (first motor) and detects the first detection signal Rm that matches the rotational angle of the first rotary shaft 15e corresponding to the predetermined amount of movement of the steered shaft 11. The second rotational angle sensor 47 is disposed in the second electric motor 16 (second motor) and detects the second detection signal Rt that matches the rotational angle of the second rotary shaft 16e corresponding to the predetermined amount of movement of the steered shaft 11.

In this manner, the first rotational angle sensor 46 and the second rotational angle sensor 47 are disposed in the first electric motor 15 and the second electric motor 16, respectively. Therefore, the first rotational angle sensor 46 and the second rotational angle sensor 47 can be used also as the rotational angle sensors 15c and 16c that detect the rotational angle of the respective rotary shafts of the first electric motor 15 and the second electric motor 16 that have been used in the related art, which can contribute to a cost reduction.

In the embodiment described above, in addition, the first rotational angle sensor 46 detects the first electrical angle $\theta3$ of the first electric motor 15 (first motor), and the second rotational angle sensor 47 detects the second electrical angle $\theta4$ of the second electric motor 16 (second motor). In this manner, the respective electrical angles of the first electric motor 15 and the second electric motor 16 are separately detected by the first rotational angle sensor 46 and the second rotational angle sensor 47 that are provided thereto, which is expected to improve the detection precision.

In the embodiment described above, in addition, the second multiplication factor of angle, which is the number of periods in which the second detection signal Rt varies during one rotation of the second rotary shaft 16e, is set to be different from the first multiplication factor of angle, which is the number of periods in which the first detection signal Rm varies during one rotation of the first rotary shaft 15e. The first power transmission portion 15A is set such that the steered shaft 11 is moved by the first amount of movement, which corresponds to one rotation of the first rotary shaft 15e, in the axial direction by transmitting the first drive force of the first electric motor 15 (first motor) to the first ball screw nut 17 (first nut). In addition, the second power transmission portion 16A is set such that the steered shaft 11 is moved by the second amount of movement, which corresponds to one rotation of the second rotary shaft 16e, in the axial direction by transmitting the second drive force of the second electric motor 16 (second motor) to the second ball screw nut 18 (second nut). The first amount of movement and the second amount of movement are set to be equal to each other.

In this manner, since the respective multiplication factors of angle of the first rotational angle sensor 46 and the second rotational angle sensor 47 are different from each other, the first drive force and the second drive force can be made equal to each other, and the respective amounts of movement (the first amount of movement and the second amount of movement) by which the steered shaft 11 is moved in the axial direction by the first drive force and the second drive force can also be made equal to each other. That is, the first power transmission portion 15A and the second power transmission portion 16A can be constituted with the same specifications. Therefore, such constituent parts can be commonized, and the steering device 10 can be manufactured at a low cost.

In the embodiment described above, in addition, the first ball screw nut 17 (first nut) and the second ball screw nut 18 (second nut) are each a ball screw nut that has the balls 11a1, 11b1 (rolling elements) and the rolling path 11a3, 11b3 in which the balls 11a1, 11b1 roll. The first power transmission portion 15A includes the first speed reduction mechanism MS1 that is provided between the first rotary shaft 15e and the first ball screw nut 17 and that reduces the rotational speed of the first rotary shaft 15e at the first speed reduction ratio G1. The first feed screw portion MD1 that includes the first ball screw nut 17 and the first male thread groove 11a2 is configured to include the lead L1, and changes the direction of the first drive force into the axial direction.

The second power transmission portion 16A includes the second speed reduction mechanism MS2 that is provided between the second rotary shaft 16e and the second ball screw nut 18 (second nut) and that reduces the rotational speed of the second rotary shaft 16e at the second speed reduction ratio G2. In addition, the second feed screw portion MD2 that includes the second ball screw nut 18 and the second male thread groove 11b2 is configured to include the lead L2, and changes the direction of the second drive force into the axial direction. At this time, the first speed reduction ratio G1 and the second speed reduction ratio G2 are equal to each other, and the lead L1 and the lead L2 are equal to each other.

In this manner, the respective multiplication factors of angle of the first rotational angle sensor 46 and the second rotational angle sensor 47 are different from each other. Thus, the first detection signal Rm and the second detection signal Rt can output different output values even if the first speed reduction ratio G1 and the second speed reduction ratio G2 that constitute the first power transmission portion 15A are equal to each other and the lead L1 and the lead L2 are equal to each other. Therefore, further commonization of parts can be achieved, and the steering device 10 can be manufactured further inexpensively.

In the embodiment described above, the respective multiplication factors of angle of the first rotational angle sensor 46 and the second rotational angle sensor 47 are set to be different from each other, the first speed reduction ratio G1 and the second speed reduction ratio G2 are set to be equal to each other, and the lead L1 and the lead L2 are set to be equal to each other. However, the present invention is not limited to the above aspect. In a steering device 110 (see FIGS. 1 and 2) according to a first modification, the respective multiplication factors of angle of the first rotational angle sensor 46 and the second rotational angle sensor 47 may be equal to those according to the embodiment described above, the first speed reduction ratio G1 and the second speed reduction ratio G2 may be different from each other, and the lead L1 and the lead L2 may be different each other. At this time, the first drive force and the second drive force are equal to each other. In this case, the first speed reduction ratio G1 and the lead L1, and the second speed reduction ratio G2 and the lead L2, may be set as desired such that the first amount of movement and the second amount of movement, which are amounts of movement of the steered shaft 11 in the axial direction, are equal to each other.

Further, in a steering device 210 (see FIGS. 1 and 2) according to a second modification, one of a combination of the first speed reduction ratio G1 and the second speed reduction ratio G2 and a combination of the lead L1 and the lead L2 may be set to be equal to each other, the other of such combinations may be set to be different from each other, and the first drive force and the second drive force may be set to be different from each other. This also allows the absolute position of the steered shaft 11 to be computed well as in the embodiment described above, except for an increase in the cost.

In the embodiment described above, in addition, the respective multiplication factors of angle of the first rotational angle sensor 46 and the second rotational angle sensor 47 are set to be different from each other. However, the present invention is not limited to such an aspect. In a steering device 310 (see FIGS. 1 and 2) according to a third modification, the respective multiplication factors of angle of the first rotational angle sensor 46 and the second rotational angle sensor 47 may be equal to each other. That is, the second multiplication factor of angle, which is the number of periods in which the second detection signal Rt varies during one rotation of the second rotary shaft 16e about an axis, may be set to be equal to the first multiplication factor of angle, which is the number of periods in which the first detection signal Rm varies during one rotation of the first rotary shaft 15e about an axis. In this case, the same sensor can be applied as the first rotational angle sensor 46 and the second rotational angle sensor 47, and the cost can be reduced in this respect.

At this time, the first power transmission portion 15A is set such that the steered shaft 11 can be moved by the first amount of movement, which corresponds to one rotation of the first rotary shaft 15e, in the axial direction by transmitting the first drive force of the first electric motor 15 (first motor) to the first ball screw nut 17. In addition, in the case where the second drive force of the second electric motor 16 (second motor) is equal to the first drive force, the second power transmission portion 16A is set such that the steered shaft 11 is movable by a second amount of movement, which corresponds to one rotation of the second rotary shaft, in the axial direction by transmitting the second drive force to the second ball screw nut 18, and the second amount of movement is set to be different from the first amount of movement.

That is, in the steering device 310 according to the third modification, the first amount of movement and the second amount of movement, by which the first power transmission portion 15A and the second power transmission portion 16A move the steered shaft 11 in the axial direction in the case where the first rotary shaft 15e and the second rotary shaft 16e equally make one rotation, are set to be different from each other. Therefore, in order to make the respective amounts of movement of the steered shaft 11 equal to each other, it is necessary to control the respective rotational angles of the first rotary shaft 15e and the second rotary shaft 16e so as to be different from each other. Consequently, the first electrical angle θ3 of the first rotary shaft 15e of the first electric motor 15 and the second electrical angle θ4 of the second rotary shaft 16e of the second electric motor 16 are inevitably different from each other, and the first detection signal Rm and the second detection signal Rt with different output values are detected. This also allows the absolute position of the steered shaft 11 to be computed as in the embodiment described above.

In addition, in a steering device 410 (see FIGS. 1 and 2) according to a fourth modification, as in the third modification described above, the respective multiplications factor of angle of the first rotational angle sensor 46 and the second rotational angle sensor 47 may be equal to each other, one of a combination of the first speed reduction ratio G1 and the second speed reduction ratio G2 and a combination of the lead L1 and the lead L2 may be set to be equal to each other, the other of such combinations may be set to be different from each other, and the first drive force and the second drive force may be set to be different from each other. Further, both the combination of the first speed reduction ratio G1 and the second speed reduction ratio G2 and the combination of the lead L1 and the lead L2 may be set to be different from each other, and the first drive force and the second drive force may be set to be different from each other. This also allows the absolute position of the steered shaft 11 to be computed in the same manner as described above.

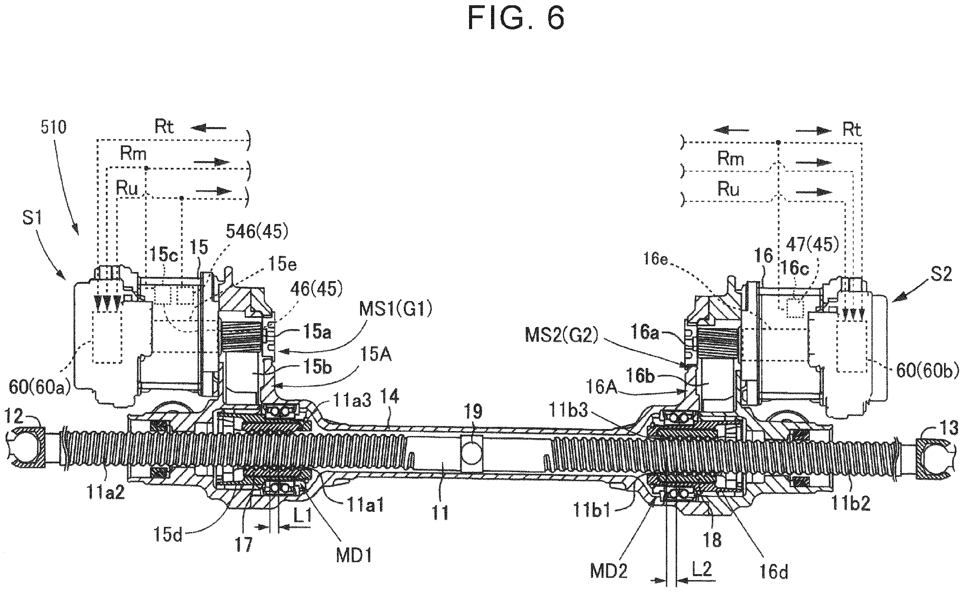

In addition, as illustrated in FIG. 6, a steering device 510 according to a fifth modification may include a third rotational angle sensor 546. The third rotational angle sensor 546 is disposed in any of the first electric motor 15 (first motor) and the second electric motor 16 (second motor). In the present embodiment, the third rotational angle sensor 546 is disposed in the first electric motor 15. The third rotational angle sensor 546 detects a third detection signal Ru corresponding to the first rotary shaft 15e. The detected third detection signal Ru is input to the computation devices 60a and 60b.

At this time, the multiplication factor of angle of the third rotational angle sensor 546 is set to be different from the multiplication factor of angle of the first rotational angle sensor 46 of the first electric motor 15 in which the third rotational angle sensor 546 is disposed. Consequently, the absolute position of the steered shaft 11 in the axial direction can be computed using the first detection signal Rm that is detected by the first rotational angle sensor 46 and the third detection signal Ru that is detected by the third rotational angle sensor 546 as in the embodiment described above.

The third rotational angle sensor 546 may be disposed in the second electric motor 16. At this time, the multiplication factor of angle of the third rotational angle sensor 546 is set to be different from the multiplication factor of angle of the second rotational angle sensor 47 of the second electric motor 16 in which the third rotational angle sensor 546 is disposed. This also allows the absolute position of the steered shaft 11 in the axial direction to be computed using the second detection signal Rt that is detected by the second rotational angle sensor 47 and the third detection signal Ru that is detected by the third rotational angle sensor 546.

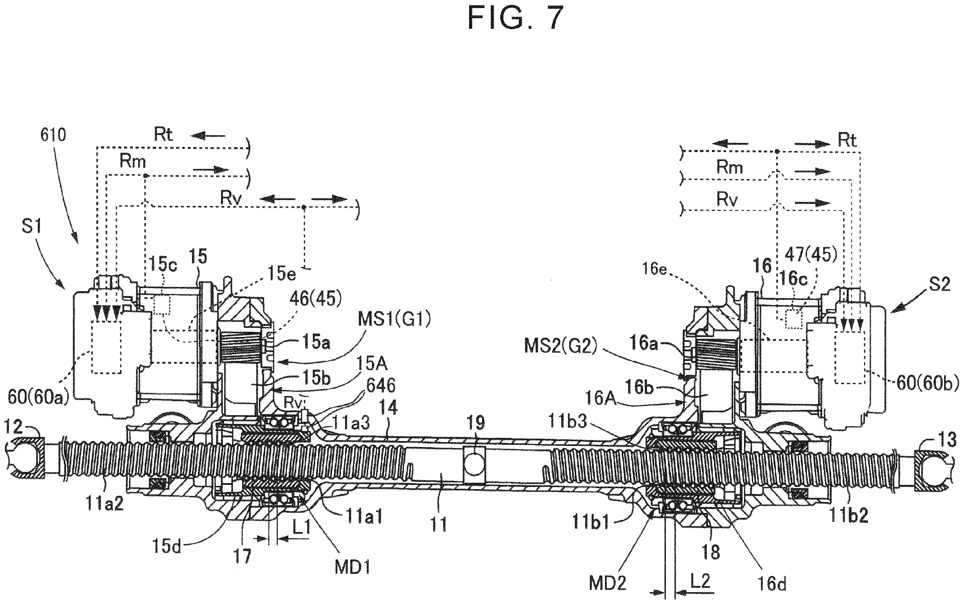

Further, as illustrated in FIG. 7, a steering device 610 according to a sixth modification may include a fourth rotational angle sensor 646. The fourth rotational angle sensor 646 is attached to any of one of the two pulleys 15a and 15d of the first power transmission portion 15A, the first ball screw nut 17 (first nut), one of the two pulleys 16a and 16d of the second power transmission portion 16A, and the second ball screw nut 18 (second nut). In the present embodiment, as illustrated in FIG. 7, the fourth rotational angle sensor 646 is disposed on both the pulley 15d and the housing 14 in order to detect rotation of the pulley 15d with the larger diameter, of the two pulleys 15a and 15d, by way of example. It should be noted, however, that the fourth rotational angle sensor 646 may be disposed on both the pulley 16d and the housing 14 in order to detect rotation of the pulley 16d with the larger diameter, of the two pulleys 16a and 16d.

The fourth rotational angle sensor 646 detects a fourth detection signal Rv that matches the rotational angle of the pulley 15d (16d). The detected fourth detection signal Rv is input to the computation devices 60a and 60b. At this time, the period of the fourth detection signal Rv that varies periodically in correspondence with the absolute position of the steered shaft 11 is set to be different from the period of the first detection signal Rm (or the second detection signal Rt) that is detected by the first rotational angle sensor 46 (or the second rotational angle sensor 47). This also allows the absolute position of the steered shaft 11 in the axial direction to be computed using the fourth detection signal Rv that is detected by the fourth rotational angle sensor 646 and the first detection signal Rm (second detection signal Rt) that is detected by the first rotational angle sensor 46 (second rotational angle sensor 47) as in the embodiment described above.

The fourth rotational angle sensor 646 may be attached to any of the pulley 15a of the first power transmission portion 15A, the first ball screw nut 17, the pulley 16a of the second power transmission portion 16A, and the second ball screw nut 18 (second nut) under the same condition as described above. Consequently, the absolute position of the steered shaft 11 in the axial direction can be computed using the fourth detection signal Rv that is detected by the fourth rotational angle sensor 646 and the first detection signal Rm (second detection signal Rt) that is detected by the first rotational angle sensor 46 (second rotational angle sensor 47) in the same manner as described above. This configuration is also expected to achieve the same effect as that according to the embodiment described above.

In the embodiment described above, the first electric motor 15 and the first ball screw nut 17 are coupled so as to be able to transmit power via the pulley 15a, the belt 15b, and the pulley 15d. In addition, the second electric motor 16 and the second ball screw nut 18 are coupled so as to be able to transmit power via the pulley 16a, the belt 16b, and the pulley 16d. That is, in the embodiment described above, the output shaft of the first electric motor 15 and the output shaft of the second electric motor 16 are configured to be parallel to the steered shaft 11.

However, the present invention is not limited to the above aspect. A first electric motor (not illustrated) and a second electric motor (not illustrated) configured similarly to the first electric motor 15 and the second electric motor 16 may be disposed coaxially with the steered shaft 11. That is, the first drive force and the second drive force may be transmitted directly to the first ball screw nut 17 and the second ball screw nut 18. In this case, a rotor (not illustrated) of the first electric motor and the first ball screw nut 17 are coupled integrally with each other, and a rotor (not illustrated) of the second electric motor and the second ball screw nut 18 are coupled integrally with each other.

In this manner, also in the case where the first electric motor and the second electric motor are disposed coaxially with the steered shaft 11, the steering device 10 can compute the absolute position of the steered shaft 11 in the same manner as in the embodiment described above. Thus, with this modification, it is possible to further reduce the size of the steering device 10 in the radial direction of the steered shaft 11, in particular, in addition to obtaining the same effect as that according to the embodiment described above. However, the present invention is not limited to the above aspect. The first drive force and the second drive force may be transmitted to the first ball screw nut 17 and the second ball screw nut 18 via respective planetary gears. At this time, the respective speed reduction ratios of the planetary gears may be considered to correspond to the first and second speed reduction ratios G1 and G2.

In the embodiment described above, in addition, the first electric motor 15 and the second electric motor 16 are fixed to the housing 14 with the respective output shafts thereof facing each other. Alternatively, it is also possible to dispose the first electric motor 15 and the second electric motor 16 such that the respective output shafts thereof are oriented in the same direction in the right-left direction of the steered shaft 11. The first electric motor 15 and the second electric motor 16 can be fixed to the housing 14 to generate the first drive force and the second drive force, respectively.

**Claims**

1. A steering device **characterized by** comprising:

    a steered shaft (11) that has a first male thread groove provided as one of a right-hand thread and a left-hand thread and a second male thread groove provided as the other of a right-hand thread and a left-hand thread, the steered shaft (11) being moved in an axial direction to steer right and left steered wheels;
    a first nut (17) threadedly engaged with the first male thread groove;
    a second nut (18) threadedly engaged with the second male thread groove;
    a first motor (15) configured to generate a first drive force through rotation of a first rotary shaft (15e);
    a second motor (16) configured to operate independently of the first motor (15) and configured to generate a second drive force through rotation of a second rotary shaft (16e);
    a first power transmission portion (15A) configured to transmit the first drive force generated by the first motor to the first nut, configured to convert the first drive force into a force in the axial direction, and configured to bias the steered shaft (11) in the axial direction;
    a second power transmission portion (16A) configured to transmit the second drive force generated by the second motor to the second nut, configured to convert the second drive force into a force in the axial direction, and configured to bias the steered shaft (11) in the axial direction;
    a signal detection device (45) configured to detect a first detection signal and a second detection signal with different periods as detection signals, the detection signals vary periodically in correspondence with an absolute position of the steered shaft after being moved by a predetermined amount of movement by being biased in the axial direction by the first drive force and the second drive force that are transmitted to the first nut and the second nut; and
    a computation device (60) configured to compute the absolute position of the steered shaft in the axial direction based on the first detection signal and the second detection signal that are detected by the signal detection device.

2. The steering device according to claim 1, **characterized in that**
    when the first detection signal has a period L3, a first desired integer is defined as m, the second detection signal has a period L4, and a second desired integer is defined as n, L3 and L4 are set such that there are no integer m and no integer n that meet

$$L3 \times m = L4 \times n \cdots (1)$$

    and in a case where there are an integer m and an integer n that meet the formula (1), L3 and L4 are set such that L3×m is larger than an amount of movement from the absolute position at a middle of a range of movement of the steered shaft in the axial direction to the absolute position at a terminal end of the range of movement.

3. The steering device according to claim 1 or 2, **characterized in that**:

    the signal detection device (45) includes a first rotational angle sensor (46) disposed in the first motor (15) and a second rotational angle sensor (47) disposed in the second motor (16);
the first rotational angle sensor (46) is configured to detect the first detection signal that matches a rotational angle of the first rotary shaft corresponding to the predetermined amount of movement of the steered shaft; and the second rotational angle sensor (47) is configured to detect the second detection signal that matches a rotational angle of the second rotary shaft (16e) corresponding to the predetermined amount of movement of the steered shaft (11).

4. The steering device according to claim 3, **characterized in that** the first rotational angle sensor (46) is configured to detect an electrical angle of the first motor (15), and the second rotational angle sensor (47) is configured to detect an electrical angle of the second motor.

5. The steering device according to claim 4, **characterized in that**:

a second multiplication factor of angle is set to be different from a first multiplication factor of angle, the second multiplication factor of angle is a number of periods in which the second detection signal varies during one rotation of the second rotary shaft (16e) and the first multiplication factor of angle is a number of periods of variation in the first detection signal during one rotation of the first rotary shaft;
the first power transmission portion (15A) is set such that the steered shaft (11) is moved in the axial direction by a first amount of movement corresponding to the one rotation of the first rotary shaft with the first drive force of the first motor (15) transmitted to the first nut (17);
the second power transmission portion (16A) is set such that the steered shaft (11) is moved in the axial direction by a second amount of movement corresponding to the one rotation of the second rotary shaft with the second drive force of the second motor transmitted to the second nut (18); and
the first amount of movement and the second amount of movement are set to be equal to each other.

6. The steering device according to claim 5, **characterized in that**:

the first nut (17) and the second nut (18) are each a ball screw nut that has a rolling element and a rolling path in which the rolling element rolls;
the first power transmission portion (15A) includes a first speed reduction mechanism provided between the first rotary shaft (15e) and the first nut to reduce a rotational speed of the first rotary shaft (15e) at a first speed reduction ratio, and a first feed screw portion (MD1) that has the first nut (17) and the first male thread groove has a first lead, and is configured to change a direction of the first drive force into the axial direction;
the second power transmission portion (16A) includes a second speed reduction mechanism provided between the second rotary shaft (16e) and the second nut (18) to reduce a rotational speed of the second rotary shaft at a second speed reduction ratio, and a second feed screw portion (MD2) that has the second nut (18) and the second male thread groove has a second lead, and is configured to change a direction of the second drive force into the axial direction; and
the first speed reduction ratio and the second speed reduction ratio are equal to each other, and the first lead and the second lead are equal to each other.

7. The steering device according to claim 4, **characterized in that**:

a second multiplication factor of angle is set to be equal to a first multiplication factor of angle, the second multiplication factor of angle is a number of periods in which the second detection signal varies during one rotation of the second rotary shaft (16e) and the first multiplication factor of angle is a number of periods in which the first detection signal varies during one rotation of the first rotary shaft;
the first power transmission portion (15A) is set such that the steered shaft (11) is moved in the axial direction by a first amount of movement corresponding to the one rotation of the first rotary shaft with the first drive force of the first motor (15) transmitted to the first nut (17);
the second power transmission portion (16A) is set such that the steered shaft (11) is moved in the axial direction by a second amount of movement corresponding to the one rotation of the second rotary shaft with the second drive force of the second motor (16) transmitted to the second nut (18); and
the first amount of movement and the second amount of movement are set to be different from each other.

8. The steering device according to claim 7, **characterized in that**:

the first nut (17) and the second nut (18) are each a ball screw nut that has a rolling element and a rolling path in which the rolling element rolls;

the first power transmission portion (15A) includes a first speed reduction mechanism provided between the first rotary shaft and the first nut to reduce a rotational speed of the first rotary shaft at a first speed reduction ratio, and a first feed screw portion (MD1) that has the first nut and the first male thread groove has a first lead, and is configured to change a direction of the first drive force into the axial direction;

the second power transmission portion (16A) includes a second speed reduction mechanism provided between the second rotary shaft (16e) and the second nut (18) to reduce a rotational speed of the second rotary shaft (16e) at a second speed reduction ratio;

a second feed screw portion that has the second nut and the second male thread groove has a second lead, and is configured to change a direction of the second drive force into the axial direction; and

the first speed reduction ratio and the second speed reduction ratio are equal to each other, and the first lead and the second lead are different from each other.

9. The steering device according to claim 7, **characterized in that**:

the first nut (17) and the second nut (18) are each a ball screw nut that has a rolling element and a rolling path in which the rolling element rolls;

the first power transmission portion (15A) includes a first speed reduction mechanism provided between the first rotary shaft (15e) and the first nut (17) to reduce a rotational speed of the first rotary shaft (15e) at a first speed reduction ratio;

a first feed screw portion that has the first nut (17) and the first male thread groove has a first lead, and is configured to change a direction of the first drive force into the axial direction;

the second power transmission portion includes a second speed reduction mechanism provided between the second rotary shaft and the second nut to reduce a rotational speed of the second rotary shaft at a second speed reduction ratio;

a second feed screw portion that has the second nut and the second male thread groove has a second lead, and is configured to change a direction of the second drive force into the axial direction; and

the first speed reduction ratio and the second speed reduction ratio are different from each other, and the first amount of movement and the second amount of movement are different from each other.

10. The steering device according to claim 3, **characterized by** further comprising:
a third rotational angle sensor (546), wherein:

the third rotational angle sensor (546) is disposed in one of the first motor (15) and the second motor (16), and configured to detect a third detection signal that matches the rotational angle of the first rotary shaft or the second rotary shaft; and

a multiplication factor of angle of the third rotational angle sensor (546) is set to be different from the multiplication factor of angle of the first rotational angle sensor or the second rotational angle sensor that is included in the first motor or the second motor in which the third rotational angle sensor is disposed.

11. The steering device according to claim 3, **characterized by** further comprising:
a fourth rotational angle sensor (646), wherein:

the fourth rotational angle sensor (646) is attached to any of one of two pulleys included in the first power transmission portion, the first nut, one of two pulleys included in the second power transmission portion, and the second nut, and configured to detect a fourth detection signal that matches a rotational angle thereof; and

a period of the fourth detection signal that varies periodically in correspondence with the absolute position of the steered shaft is set to be different from the period of the first detection signal or the period of the second detection signal.

# FIG. 1

10, 110, 210, 310, 410, 510, 610

FIG. 2

# FIG. 3

15f、16f    54    46、47    55    51

58

57

56

53    15e、16e    52

# FIG. 4

55

56    57    58

E1

E2
(Rm、Rt)

E3

# FIG. 5A

MAXIMUM RANGE OF MOVEMENT

FIRST
ELECTRICAL
ANGLE
($\theta 3$)
(Rm)

$\theta 3$

L3    ONE PERIOD

360°

0

L5

$\theta 3-1$

0
(NEUTRAL POSITION)
ABSOLUTE POSITION OF STEERED SHAFT
(AMOUNT OF MOVEMENT)

# FIG. 5B

MAXIMUM RANGE OF MOVEMENT

SECOND
ELECTRICAL
ANGLE
($\theta 4$)
(Rt)

ONE
PERIOD

$\theta 4$

L4

360°

0

L5

$\theta 4-1$

0
(NEUTRAL POSITION)
ABSOLUTE POSITION OF STEERED SHAFT
(AMOUNT OF MOVEMENT)

# FIG. 5C

MAXIMUM RANGE OF MOVEMENT

($\theta 4 - \theta 3$)

360°
0
-360°

$\theta 4 - \theta 3$

L5

$(\theta 4-1) - (\theta 3-1)$

0
(NEUTRAL POSITION)
ABSOLUTE POSITION OF STEERED SHAFT

# FIG. 6

FIG. 7

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 2019/002015 A1 (HWANG SANG WOO [KR] ET AL) 3 January 2019 (2019-01-03)<br>* paragraph [0029] - paragraph [0054]; claims 1,8,9; figures 1-3 *<br>----- | 1-3<br>1-9<br>10,11 | INV.<br>B62D15/02<br>B62D5/04 |
| Y<br><br>A | JP 2004 325182 A (TOYOTA MOTOR CORP) 18 November 2004 (2004-11-18)<br>* paragraph [0026] - paragraph [0079] *<br>* pages 1-18, paragraph 96 - paragraph 156 *<br>----- | 1-9<br><br>10,11 | |
| X,P | EP 3 581 465 A2 (MANDO CORP [KR]) 18 December 2019 (2019-12-18)<br>* paragraph [0025] - paragraph [0096]; figures 1-16 *<br>----- | 1,3 | |
| E | EP 3 699 061 A1 (JTEKT CORP [JP]) 26 August 2020 (2020-08-26)<br>* paragraph [0009] - paragraph [0070]; figures 1-9 *<br>----- | 1,3 | |

TECHNICAL FIELDS
SEARCHED (IPC)

B62D

The present search report has been drawn up for all claims

| Place of search | Date of completion of the search | Examiner |
|---|---|---|
| The Hague | 22 September 2020 | Signorini, Luca |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

............................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 16 9449

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2020

| Patent document cited in search report | | Publication date | Patent family member(s) | | Publication date |
|---|---|---|---|---|---|
| US 2019002015 | A1 | 03-01-2019 | CN | 109131537 A | 04-01-2019 |
| | | | KR | 20190001964 A | 08-01-2019 |
| | | | US | 2019002015 A1 | 03-01-2019 |
| JP 2004325182 | A | 18-11-2004 | NONE | | |
| EP 3581465 | A2 | 18-12-2019 | CN | 110395312 A | 01-11-2019 |
| | | | EP | 3581465 A2 | 18-12-2019 |
| | | | US | 2019329816 A1 | 31-10-2019 |
| EP 3699061 | A1 | 26-08-2020 | CN | 111572623 A | 25-08-2020 |
| | | | EP | 3699061 A1 | 26-08-2020 |
| | | | US | 2020262470 A1 | 20-08-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010214978 A